# EUROPÄISCHE PATENTSCHRIFT

(11) **EP 1 021 662 B1**
(45) Veröffentlichungstag und Bekanntmachung des Hinweises auf die Patenterteilung: **26.10.2005**
(21) Anmeldenummer: 99952307.9
(22) Anmeldetag: 05.08.1999
(51) Int. Cl.: F16F 1/02, H01L 41/053, B21D 31/02

(54) **PIEZOELEKTRISCHE AKTOREINHEIT**
PIEZOELECTRIC ACTUATOR UNIT
UNITE ACTIONNEUR PIEZO-ELECTRIQUE

(30) Priorität: 06.08.1998 DE 19835628
(43) Veröffentlichungstag der Anmeldung: 26.07.2000
(73) Patentinhaber: SIEMENS AKTIENGESELLSCHAFT, 80333 München (DE)
(72) Erfinder: VOIGT, Andreas, D-93055 Regensburg (DE); FRANK, Wilhelm, D-96049 Bamberg (DE); LEWENTZ, Günter, D-93055 Regensburg (DE); ZUMSTRULL, Claus, D-93057 Regensburg (DE)
(86) Internationale Anmeldenummer: PCT/DE1999/002450
(87) Internationale Veröffentlichungsnummer: WO 2000/008353

(56) Entgegenhaltungen:
- DE-A- 3 844 134
- GB-A- 2 106 001
- US-A- 4 925 163
- US-A- 5 110 660
- US-A- 5 721 616
- PATENT ABSTRACTS OF JAPAN vol. 012, no. 200 (E-619), 9. Juni 1988 (1988-06-09) & JP 63 001383 A (OMRON TATEISI ELECTRONICS CO), 6. Januar 1988 (1988-01-06)

## Beschreibung

Die Erfindung betrifft eine Aktoreinheit mit einem in einem Hohlkörper angeordneten piezoelektrischen Aktor nach dem Oberbegriff des Anspruchs 1 sowie ein Verfahren zum Herstellen des Hohlkörpers der Aktoreinheit nach dem Oberbegriff des Anspruchs 11.

Aktoreinheiten mit einem piezoelektrischen Aktor, der von einem elastischen Hohlkörper vorgespannt ist, werden beispielsweise in der Kraftfahrzeugtechnik zum Steuern von Einspritzventilen einer Brennkraftmaschine eingesetzt. So ist aus der DE 38 44 134 C2 ein Einspritzventil bekannt, das von einem piezoelektrischen Aktor betätigt wird, der in einer zylindrischen Rohrfeder angeordnet und von dieser gegen das Gehäuse des Einspritzventils vorgespannt ist. Dieser Aufbau der Aktoreinheit hat jedoch den Nachteil, daß die Vorspannung des piezoelektrischen Aktors stark von den Fertigungstoleranzen des Gehäuses des Einspritzventils abhängt. Weiterhin ist der Einbau der Aktoreinheit aufwendig und erfordert einen hohen Wartungsaufwand, da bei jedem Ein- und Ausbau die Vorspannung auf den piezoelektrischen Aktor durch die Rohrfeder neu eingestellt werden muß. Darüber hinaus besteht bei den verwendeten Rohrfedern auch das Problem, daß, um eine ausreichende Elastizität für die Längsbewegung des piezoelektrischen Aktors zu erreichen, die Rohrfedern extrem dünnwandig ausgeführt werden müssen, was deren Festigkeit und damit die Lebensdauer der Aktoreinheit beeinträchtigt.

Aufgabe der vorliegenden Erfindung ist es, eine Aktoreinheit mit einem piezoelektrischen Aktor bereit zu stellen, die insbesondere zum Steuern von Kraftstoffeinspritzventilen geeignet ist und sich durch eine einfache Herstellung, leichte Montage, hohe Wartungsfreundlichkeit und lange Lebensdauer auszeichnet sowie ein Verfahren anzugeben zum Herstellen des Hohlkörpers einer solchen Aktoreinheit.

Diese Aufgabe wird bei einer Aktoreinheit durch die Merkmale des Anspruchs 1 und bei einem Herstellverfahren durch die Merkmale des Anspruchs 11 gelöst.

Bei der erfindungsgemäßen Aktoreinheit ist ein piezoelektrischer Aktor durch einen ihn umgebenden Hohkörper fest vorgespannt, so daß sich das gesamte Bauteil vorfertigen und darüber hinaus leicht z.B. in eine Brennkraftmaschine einbauen läßt, wobei auch kein Nachspannen des piezoelektrischen Aktors erforderlich wird. Die erfindungsgemäße Auslegung des den piezoelektrischen Aktor vorspannenden Hohlkörpers mit Ausnehmungen, die knochenförmig ausgeformt sind, gewährleistet weiterhin, daß der Hohlkörper auch bei den überlicherweise angelegten Vorspannungen auf den piezoelektrischen Aktor von 800 N bis 1000 N eine ausreichende Festigkeit zeigt und gleichzeitig genügend elastisch zum Ausführen der von dem piezoelektrischen Aktor erzeugten Längsbewegung ist.

Vorteilhaft ist insbesondere die Ausnehmungen auf den Hohlkörper so auszulegen, daß der minimale Abstand zwischen benachbarten Ausnehmungen ein- bis dreimal der Wandstärke des Hohlkörpers entspricht, was insbesondere die Möglichkeit zu einer einfachen und damit kostengünstigen Stanzfertigung der Ausnehmungen bietet. Weitere vorteilhafte Ausgestaltungen der Aktoreinheit und des Hohlkörpers sind in den abhängigen Ansprüchen offenbart.

Die Erfindung wird anhand der Zeichnung näher erläutert. Es zeigen:
Fig. 1 eine Schnittansicht einer erfindungsgemäßen Aktoreinheit;
Fig. 2A eine Ausführungsform eines Hohlkörpers zum Vorspannen eines piezoelektrischen Aktors als Rohrfeder;
Fig. 2B eine Schnittansicht entlang der A-A Linie bei der Rohrfeder gemäß Fig. 2A;
Fig. 2C die Rohrfeder gemäß Fig. 2A in aufgerollter Darstellung;
Fig. 2D eine Darstellung des Ausschnittes X von Fig. 2C; und
Fig. 3 eine Stanzanordnung.

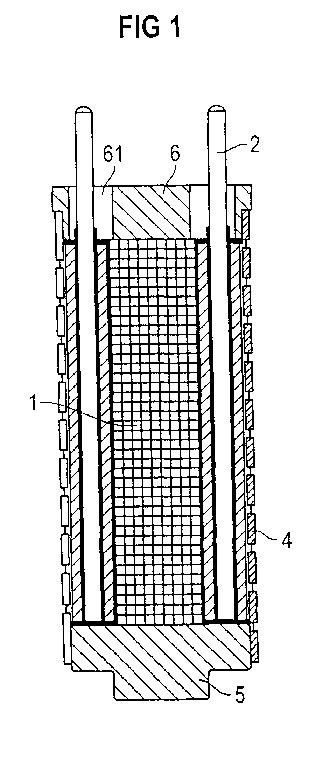

Fig. 1 zeigt im Querschnitt eine Aktoreinheit bestehend aus einem piezoelektrischen Aktor 1, der aus mehreren übereinander gestapelten piezoelektrischen Einzelelementen aufgebaut sein kann. Der piezoelektrische Aktor 1 wird über Kontaktstifte 2 angesteuert, die längs des Aktors angeordnet sind und mit dem Aktor leitend in Verbindung stehen. Durch Anlegen einer Spannung zwischen den Kontaktstiften 2 wird eine Längsdehnung des piezoelektrischen Aktors 1 erzeugt, die z.B. zum Stellen eines Einspritzventils in einer Brennkraftmaschine eingesetzt werden kann. Der piezoelektrische Aktor 1 mit den Kontaktstiften 2 ist in einem als Rohrfeder ausgebildeten Hohlkörper 4 angeordnet. Der Hohlkörper 4 kann jedoch statt des dargestellten kreisförmigen Querschnitt z.B. auch ein Rechteckprofil aufweisen, wobei die Form des Hohlkörpers vorzugsweise an die Baueinheit aus piezoelektrischem Aktor und Kontaktstiften angepaßt ist.

Der piezoelektrische Aktor 1 liegt mit seinen Stirnflächen jeweils an einer Abdeckplatte 5, 6 an, wobei die obere Abdeckplatte 6 Durchführungen 61 aufweist, durch die sich die Kontaktstifte 2 erstrecken. Die obere und untere Abdeckplatte 5, 6 sind jeweils form- und/oder kraftschlüssig, vorzugsweise durch Anschweißen, mit dem Hohlkörper 4 verbunden. Alternativ kann die Verbindung zwischen dem Hohlkörper 4 und den beiden Abdeckplatten 5, 6 auch mit Hilfe einer Bördelung erfolgen, wobei die umgebördelten oberen und unteren Randbereiche des Hohlkörpers jeweils in die Abdeckplatten eingreifen. Der piezoelektrische Aktor 1 ist durch die beiden Abdeckplatten 5, 6, die von dem Hohlkörper 4 in Position gehalten werden, mit einer definierten Kraft von vorzugsweise 800 N bis 1000 N vorgespannt. Um diese Vorspannung aufrechterhalten zu können, wird der den piezoelektrischen Aktor aufnehmende Hohlkörper vorzugsweise aus Federstahl, der sich durch einen hohen Festigkeitskennwert auszeichnet, gefertigt. Alternativ können jedoch auch andere Materialien, z.B. Werkstoffe mit niedrigem Elastizitätsmodul wie z.B. Kupfer-Berylium-Legierungen eingesetzt werden.

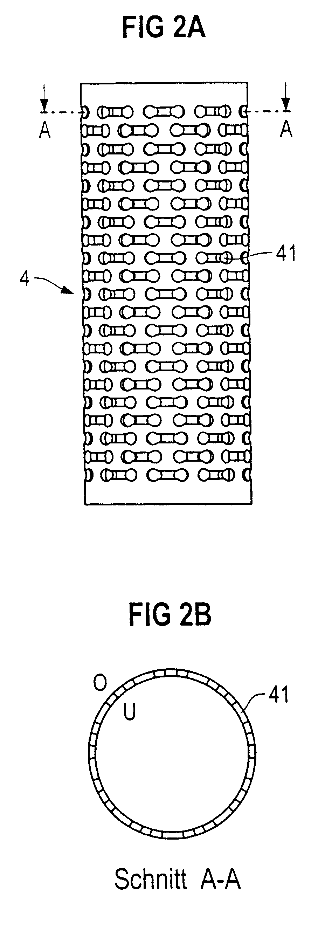

Fig. 2A bis 2D zeigen genauer den Aufbau des als Rohrfeder ausgebildeten Hohlkörpers 4. Die Rohrfeder weist über seine gesamte Fläche bis auf die Randbereiche, an denen die Abdeckplatten angeschweißt werden, gleichmäßig verteilt Ausnehmungen 41 auf, die knochenförmig ausgebildet sind und quer zur Achse durch die Rohrfeder verlaufen. Die Ausnehmungen 41 gewährleisten eine ausreichende Elastizität der einen vorgespannten piezoelektrischen Aktor aufnehmenden Rohrfeder, so daß die Rohrfeder die durch Elektrostriktion im piezoelektrischen Aktor hervorgerufene Längsdehnung nur unwesentlich behindert. Die Elastizität der Rohrfeder kann dabei durch die Anzahl und die Länge der Ausnehmungen 41 an die gewünschte Längendehnung des vorgespannten piezoelektrischen Aktors angepaßt werden.

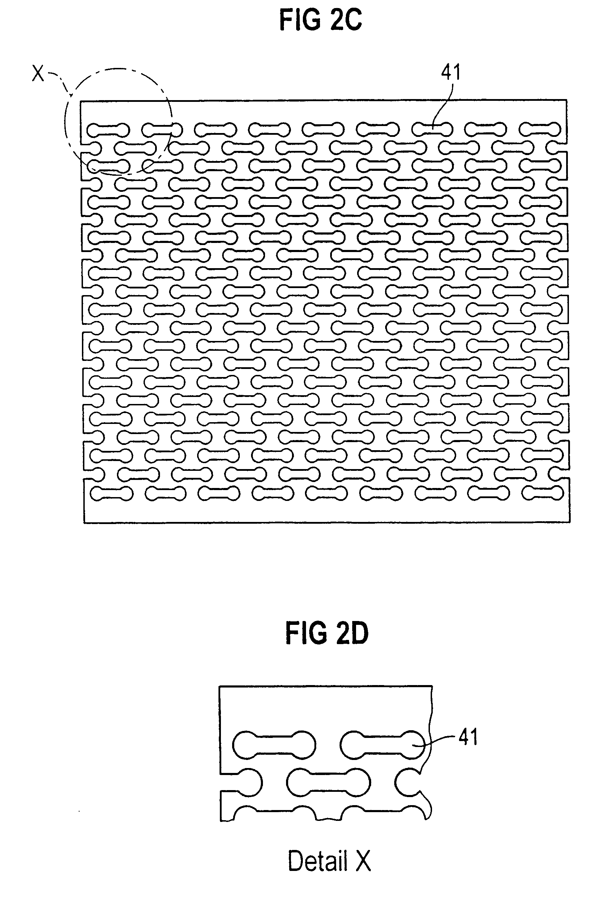

Vorteilhaft ist hierbei auch die in Fig. 2A, 2C und 2D gezeigte reihenartige Anordnung der Ausnehmungen 41 übereinander, wobei die einzelnen Reihen reißverschlußartig ineinander greifen. Dabei sind die Ausnehmungen 41 benachbarter Reihen gegenseitig versetzt angeordnet. Vorzugsweise sind die Ausnehmungen 41 zweier Reihen in der Weise versetzt, daß die kreisförmigen Endbereiche auf einer Linie liegen und Schlitze der Ausnehmungen nur jeder zweiten Reihe sich gegenüber liegen. Diese Anordnung gewährleistet eine optimale Elastizität der Rohrfeder bei gleichzeitiger ausreichender Festigkeit, um die Vorspannung auf dem piezoelektrischen Aktor aufbringen zu können. Die Elastizität wird insbesondere auch durch die knochenförmige Form der Ausnehmungen 41 unterstützt, bei der zwei kreisförmige Aussparungen über einen Schlitz miteinander verbunden sind. Bevorzugte Größenbereiche liegen bei den kreisförmigen Aussparungen bei Durchmessern von 0,8 - 1,6 mm und bei den Abständen zwischen den Mittelpunkten der Aussparungen im Bereich von 1,5 - 3,5 mm. Diese Form läßt sich weiterhin sehr einfach und genau durch z.B. Stanzen in einem Federstahlblech ausbilden. Aus fertigungstechnischen Gründen ist es weiterhin vorteilhaft, wenn der minimale Abstand zwischen benachbarten Ausnehmungen 41 ein- bis dreimal die Wandstärke der Rohrfeder ist.

Die Rohrfeder wird vorzugsweise aus einem Federstahlband mit einer Dicke von 0,5 mm gefertigt. In einem ersten Schritt werden dabei in das Federstahlband die Ausnehmungen eingestanzt. Alternativ besteht auch die Möglichkeit, die Ausnehmungen durch Drahterodieren, Fräsen, Bohren oder mit elektrochemischen Verfahren auszubilden. Vorzugsweise wird weiterhin der Randbereich der Ausnehmungen geringfügig plastisch verformt, so daß sich eine Verfestigung des Federstahlbandes durch die eingebrachte Druck-Eigenspannung einstellt. Dies kann beispielsweise dadurch erreicht werden, daß der Stanzstempel, mit dem die Ausnehmungen eingestanzt werden, nach Ausführung des Stanzvorgangs auf einen größeren Querschnitt verbreitert wird, so daß sich eine Verdickung des Randbereiches der Ausnehmungen einstellt. Hierbei kann weiterhin ein leichtes Verbiegen des Stanzgrates der Ausnehmungen aus der Bandebene heraus auftreten. Eine Verfestigung der Randbereiche der Ausnehmungen kann z.B. auch durch Kugelstrahlen dieser Randbereiche erreicht werden.

Nach dem Ausbilden der Ausnehmungen 41 wird das Federstahlband auf das für die Rohrfeder gewünschte Maß zugeschnitten, wobei die Ausnehmungen vorzugsweise, wie in Fig. 2D gezeigt, so ausgelegt werden, daß sie an den Stoßkanten mittig durchgeschnitten sind. Dann wird der Zuschnitt gerollt, wobei die Schnitt- bzw. Stanzkanten nach außen orientiert sind. Anschließend werden die Kanten entgratet und die Rohrform mit einer vorzugsweise durch einen Laser erzeugten Längschweißnaht fixiert. Um die Festigkeit der Rohrfeder weiter zu steigern, kann dann noch eine Wärmebehandlung durchgeführt werden. Alternativ zu den in Fig. 2 gezeigten geradlinigen Stoßkanten der Rohrfeder können jedoch beliebige Stoßkantenformen, z.B. in Form einer Sinuswelle oder einer Zickzacklinie ausgebildet sein, wobei zum Fixieren der Rohrfeder dann eine entsprechend geformte Schweißnaht hergestellt wird.

Statt einer Fixierung der Rohrform durch Schweißen kann eine Fixierung auch durch die oberen und unteren Abdeckplatten 5, 6 erfolgen, so daß die Stoßkanten nur aneinander anliegen. Hierdurch ergibt sich eine vorteilhafte Verteilung der Druck- und Federkräfte im Hohlkörper.

Die Ausbildung der Aktoreinheit mit einem äußeren Hohlkörper, der vorzugsweise als Rohrfeder ausgebildet ist und in dem der piezoelektrische Aktor mittels form- und/oder kraftschlüssig mit dem Hohlkörper verbundenen oberen und unteren Abdeckungen vorgespannt ist, ermöglicht aufgrund seines kompakten Aufbaus einen einfachen Transport und einen leichten Ein- und Ausbau z.B. in eine Brennkraftmaschine zur Steuerung von Einspritzventilen. Die Ausbildung von quer zur Hohlkörperachse verlaufenden knochenförmigen Ausnehmungen ermöglicht dabei eine optimale Einstellung der Elastizität des Hohlkörpers an die gewünschte Längsbewegung des piezoelektrischen Aktors und eine gleichzeitig vereinfachte Fertigung des Hohlkörpers.

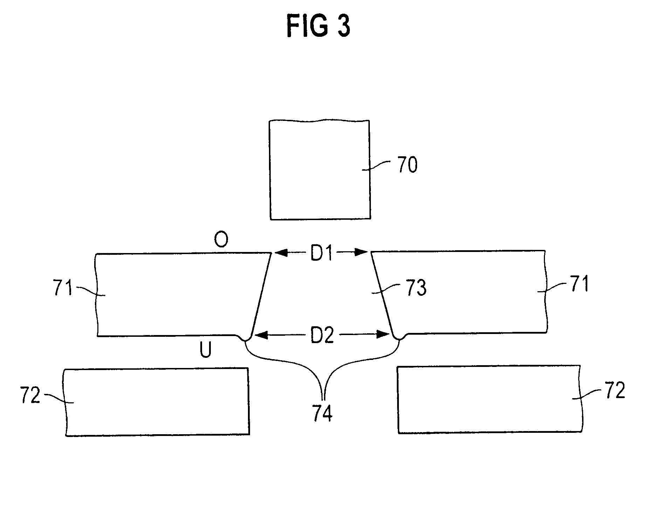

Figur 3 zeigt schematisch eine Anordnung zum Einbringen einer Ausnehmung 73 in ein Federstahlband 71 durch einen Stanzvorgang. Es ist ein Stanzwerkzeug in Form eines Stempels 70 vorgesehen, der in das Federstahlband, das als Platte 71 ausgebildet ist und auf einer Auflage 72 aufliegt, eine Ausnehmung 73 stanzt. Dabei wird ein Teil des Federstahlbandes durch eine Öffnung 74 der Auflage 72 herausgedrückt.

Die gestanzte Ausnehmung 73 weist aufgrund des Stanzvorgangs auf der Unterseite U, der der Auflage 72 zugewandt ist, eine größere Fläche D1 auf als auf der Oberseite O, in die das Stanzwerkzeug 70 zuerst eindringt. Zusätzlich wird durch das Stanzen ein Grat 74 auf der Unterseite U erzeugt, der die Ausnehmung 73 umgibt.

Die unterschiedlichen Größen der Flächen D1,D2 der Ausnehmung 73 auf der Ober- und Unterseite O,U und/oder der Grat 74 führen zu einer unterschiedlichen Steifigkeit, Härte und unterschiedlichen Federeigenschaft auf der Oberseite O im Vergleich zur Unterseite U des Federstahlbandes 71. Dies ist nachteilig für eine gleichmäßige Druckverteilung und beeinträchtigt die Langzeitstabilität der Rohrfeder.

Um diese Inhomogenitäten zu reduzieren ist es vorteilhaft, bei der Herstellung einer Rohrfeder entsprechend Figur 2a und 2b das Federstahlband in der Weise zu verbinden, daß die Oberseite O auf der Außenseite der Rohrfeder und die Unterseite U auf der Innenseite der Rohrfeder angeordnet ist.

Durch die beschriebene Art der Herstellung werden die nach dem Stanzen unterschiedlichen Flächen D1,D2 der Ausnehmung 73 aneinander angepaßt, da die kleinere Fläche D2 durch die Biegung auf der Außenseite aufgeweitet und damit vergrößert und die größere Fläche D1 gestaucht und damit verkleinert wird. Dadurch werden die durch den Stanzvorgang in das Federstahlband eingebrachten Inhomogenitäten reduziert.

## Patentansprüche

1. Aktoreinheit mit einem in einem Hohlkörper (4) angeordneten piezoelektrischen Aktor (1), wobei der Hohlkörper elastisch ausgebildet ist und den Aktor vorspannt,
**dadurch gekennzeichnet, daß**
der Hohlkörper (4) mit dem oberen und unteren Ende des Aktors kraft- und/oder formschlüssig verbunden ist, wobei der Hohlkörper mit Ausnehmungen (41) versehen ist, die knochenförmig ausgebildet sind und quer zur Hohlkörperachse verlaufen.

2. Aktoreinheit nach Anspruch 1, **dadurch gekennzeichnet, daß** der piezoelektrische Aktor (1) in seine Ausdehnungsrichtung zwischen eine obere und eine untere Abdeckplatte (5, 6) eingespannt ist, die mit dem Hohlkörper (4) jeweils kraft- und/oder formschlüssig verbunden sind.

3. Aktoreinheit nach Anspruch 1 oder 2, **dadurch gekennzeichnet, daß** die Ausnehmungen (41) in Reihen übereinander angeordnet sind, wobei die Ausnehmungen der Reihen gegeneinander seitlich versetzt angeordnet sind.

4. Aktoreinheit nach einem der Ansprüche 1, 2 oder 3, **dadurch gekennzeichnet, daß** der minimale Abstand zwischen benachbarten Ausnehmungen (41) zweier Reihen ein- bis dreimal die Wandstärke des Hohlkörpers (4) ist.

5. Aktoreinheit gemäß einem der vorhergehenden Ansprüche, **dadurch gekennzeichnet, daß** die Ausnehmungen (41) gleichmäßig über den Umfang des Hohlkörpers (4) verteilt sind.

6. Aktoreinheit nach einem der vorhergehenden Ansprüche, **dadurch gekennzeichnet, daß** der Hohlkörper (4) aus Federstahl gefertigt ist und daß die Ausnehmungen (41) eingestanzt sind.

7. Aktoreinheit nach einem der vorhergehenden Ansprüche, **dadurch gekennzeichnet, daß** der Hohlkörper (4) mindestens eine Schweißnaht aufweist, die zwei Stoßkanten des Hohlkörpers miteinander verbindet.

8. Aktoreinheit nach einem der vorhergehenden Ansprüche, **dadurch gekennzeichnet, daß** der Hohlkörper (4) zwei Stoßkanten aufweist, die einander zugeordnet sind und sich über die gesamte Länge des Hohlkörpers erstrecken.

9. Aktoreinheit nach einem der vorhergehenden Ansprüche, **dadurch gekennzeichnet, daß** die Randbereiche der Ausnehmungen (41) wenigstens teilweise verdichtet sind.

10. Aktoreinheit nach einem der vorhergenden Ansprüche, **dadurch gekennzeichnet, daß** der Hohlkörper aus einer Platte (71) gefertigt ist, in die mittels Stanzen Ausnehmungen (73) eingebracht sind, und daß auf der Außenseite des Hohlkörpers diejenige Seite (A) der Platte angeordnet ist, in die beim Stanzvorgang ein Stanzwerkzeug (70) eingedrungen ist.

11. Verfahren zum Herstellen der Aktoreinheit gemäß Anspruch 1, mit folgenden Verfahrensschritten:
- in eine Platte (71) wird mit einem Stanzwerkzeug (70) eine Ausnehmung (73) eingebracht,
- das Stanzwerkzeug (70) dringt auf der Oberseite (A) der Platte (71) in die Platte (71) ein und stanzt einen Teil der Platte auf der Unterseite (B) heraus,
- wobei die Platte (71) auf einem Lager (72) aufliegt,
- anschließend wird die Platte (71) zu einer Hülse geformt und an aneinander anliegende Kanten verbunden,
- **dadurch gekennzeichnet,**
- **daß** beim Formen der Hülse die Oberseite (A) auf der Außenseite und die Unterseite (B) der Platte (71) auf der Innenseite der Hülse angeordnet wird.

## Claims

1. Actuator device with a piezo electric actuator (1) arranged in a hollow body (4), the hollow body being designed to be elastic and pretensioning the actuator,
**characterised in that**
the hollow body (4) is connected to the upper and lower ends of the actuator in a nonpositive and/or positive manner, the hollow body being provided with recesses (41) which are designed to be bone-shaped and run perpendicular to the axis of the hollow body.

2. Actuator device according to Claim 1, **characterised in that** the piezoelectric actuator (1) is clamped between an upper and a lower cover plate (5, 6) in its expansion direction, said cover plates being connected to the hollow body (4) in a nonpositive and/or positive manner respectively.

3. Actuator device according to Claim 1 or 2, **characterised in that** the recesses (41) are arranged in rows one on top of the other, the recesses of the rows being arranged with lateral displacement in respect of each other.

4. Actuator device according to one of Claims 1, 2 or 3, **characterised in that** the minimum distance between adjacent recesses (41) of two rows is one to three times the wall thickness of the hollow body (4).

5. Actuator device according to one of the preceding claims, **characterised in that** the recesses (41) are distributed evenly over the circumference of the hollow body (4).

6. Actuator device according to one of the preceding claims, **characterised in that** the hollow body (4) is manufactured from spring steel and that the recesses (41) are punched.

7. Actuator device according to one of the preceding claims, **characterised in that** the hollow body (4) has at least one weld seam, which connects two abutting edges of the hollow body together.

8. Actuator device according to one of the preceding claims, **characterised in that** the hollow body (4) has two abutting edges, which are assigned to one another and extend across the entire length of the hollow body.

9. Actuator device according to one of the preceding claims, **characterised in that** the peripheral areas of the recesses (41) are at least partially sealed.

10. Actuator device according to one of the preceding claims, **characterised in that** the hollow body is manufactured from a plate (71), in which recesses (73) are inserted by means of punching, and the side (A) of the plate, into which a punching tool (70) penetrates during the punching process, is arranged on the outside of the hollow body.

11. Method for manufacturing the actuator device according to Claim 1, with the following method steps:
- a recess (73) is inserted into a plate (71) using a punching tool (70),
- the punching tool (70) penetrates the plate (71) on the upper side (A) of the plate (71) and punches out a part of the plate on the lower side (B),
- whereby the plate (71) rests on a bearing(72)
- the plate (71) is subsequently shaped into a sleeve and connected at adjacent edges,
- **characterised in that**
- during the shaping of the sleeve, the upper side (A) is arranged on the outside and the lower side (B) of the plate (71) is arranged on the inside of the sleeve.

## Revendications

1. Unité d'actionneur avec un actionneur piézoélectrique (1) disposé dans un corps creux (4), dans lequel le corps creux est élastique et précontraint l'actionneur, **caractérisée en ce que** le corps creux (4) est assemblé par concordance de forme et/ou par force à l'extrémité supérieure et inférieure de l'actionneur, le corps creux étant pourvu d'évidements (41), qui sont configurés en forme d'os et qui sont orientés transversalement à l'axe du corps creux.

2. Unité d'actionneur selon la revendication 1, **caractérisée en ce que** l'actionneur piézoélectrique (1) est précontraint dans sa direction de dilatation entre des plaques de recouvrement supérieure et inférieure (5, 6), qui sont chacune assemblées par concordance de forme et/ou par force au corps creux (4).

3. Unité d'actionneur selon la revendication 1 ou 2, **caractérisée en ce que** les évidements (41) sont disposés en lignes les uns au-dessus des autres, les évidements des lignes étant décalés latéralement les uns par rapport aux autres.

4. Unité d'actionneur selon l'une quelconque des revendications 1, 2 ou 3, **caractérisée en ce que** la distance minimale entre des évidements voisins (41) de deux lignes est de une à trois fois l'épaisseur de paroi du corps creux (4).

5. Unité d'actionneur selon l'une quelconque des revendications précédentes, **caractérisée en ce que** les évidements (41) sont répartis uniformément sur l'étendue du corps creux (4).

6. Unité d'actionneur selon l'une quelconque des revendications précédentes, **caractérisée en ce que** le corps creux (4) est fabriqué en acier à ressort et **en ce que** les évidements (41) sont estampés.

7. Unité d'actionneur selon l'une quelconque des revendications précédentes, **caractérisée en ce que** le corps creux (4) présente au moins un cordon de soudure, qui assemble l'une à l'autre deux arêtes jointives du corps creux.

8. Unité d'actionneur selon l'une quelconque des revendications précédentes, **caractérisée en ce que** le corps creux (4) présente deux arêtes jointives, qui sont associées l'une à l'autre et qui s'étendent sur toute la longueur du corps creux.

9. Unité d'actionneur selon l'une quelconque des revendications précédentes, **caractérisée en ce que** les régions de bord des évidements (41) sont au moins en partie comprimées.

10. Unité d'actionneur selon l'une quelconque des revendications précédentes, **caractérisée en ce que** le corps creux est fabriqué à partir d'une plaque (71), dans laquelle des évidements (73) sont pratiqués par estampage, et **en ce que**, dans la face extérieure du corps creux, on a disposé la face (A) de la plaque, dans laquelle un outil d'estampage (70) a pénétré lors de l'opération d'estampage.

11. Procédé de fabrication de l'unité d'actionneur selon la revendication 1, comprenant les opérations suivantes:
- on pratique un évidement (73) dans une plaque (71) avec un outil d'estampage (70);
- l'outil d'estampage (70) pénètre dans la plaque (71) sur la face supérieure (A) de la plaque (71) et expulse une partie de la plaque sur la face inférieure (B);
- la plaque (71) reposant sur une matrice (72);
- ensuite, la plaque (71) est façonnée en un manchon et les arêtes appliquées l'une contre l'autre sont assemblées;
- **caractérisé en ce que**
- lors de la formation du manchon, la face supérieure (A) est disposée sur la face extérieure et la face inférieure (B) de la plaque (71) est disposée sur la face intérieure du manchon.
